Europäisches Patentamt

European Patent Office

Office européen des brevets

(11) Veröffentlichungsnummer : **0 199 749**
**B1**

(12) # EUROPÄISCHE PATENTSCHRIFT

(45) Veröffentlichungstag der Patentschrift :
07.06.89

(51) Int. Cl.⁴ : **G 01 V   1/02**, G 01 V   1/047

(21) Anmeldenummer : 85905054.4

(22) Anmeldetag : 07.10.85

(86) Internationale Anmeldenummer :
PCT/DE 85/00368

(87) Internationale Veröffentlichungsnummer :
WO/8602169 (10.04.86 Gazette 86/08)

(54) VORRICHTUNG ZUM ERZEUGEN VON SCHERWELLEN IN EINEM FESTEN MEDIUM.

(30) Priorität : 06.10.84 DE 3436829

(43) Veröffentlichungstag der Anmeldung :
05.11.86 Patentblatt 86/45

(45) Bekanntmachung des Hinweises auf die Patenterteilung : 07.06.89 Patentblatt 89/23

(84) Benannte Vertragsstaaten :
FR GB

(56) Entgegenhaltungen :
DE--A-- 2 938 502
FR--A-- 1 366 519
US--A-- 3 341 811

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **BOHN, Gerhard, Dr.
Peter-Vischer-Str. 25
D-8000 München 60 (DE)**
Erfinder : **STEINMETZ, Günter
Oberlanger Moor 106
D-4472 Haren (DE)**
Erfinder : **STEENBECK, Ulf
Ödenstockacher Str. 1
D-8011 Putzbrunn (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Erzeugen von Scherwellen in einem festen Medium gemäß dem Gattungsbegriff des Anspruchs 1.

Zu seismologischen Untersuchungen des Erdreiches ist es erforderlich, Druck- bzw. Scherwellen zu erzeugen, deren Fortpflanzungsparameter Aufschluß über die Struktur des Untergrundes geben. Üblich ist es hierzu, Löcher in das Erdreich zu bohren unt mit einer Sprengladung den Impuls auszulösen oder auch durch senkrecht auf die Erdoberfläche einwirkende Kräfte entsprechende Wellen zu erzeugen.

Eine Vorrichtung gemäß dem Gattungsbegriff des Anspruchs 1 ist aus der US-PS 3 341 811 bekannt, allerdings ist diese Einrichtung in ihrer Effizienz eingeschränkt, da die Wellenkräfte nicht unmittelbar in das umgebende Medium eingehen. Zwar sind aus der DE-OS 29 38 502 Vorrichtungen bekannt geworden, die die Wellenkräfte unmittelbar in das umgebende Medium einleiten können, aber deren Ausführungsformen sind so aufwendig, daß sie sich zur Erfüllung der gestellten Aufgabe nicht verwenden lassen.

Der vorliegenden Erfindung liegt die Aufgabe zugrunde, zur Eruierung von Wasseradern in Wüstengebieten eine Vorrichtung zu schaffen, die einen sehr hochfrequenten Impuls in der Größenordnung von einem KHz erzeugen kann und eine Kraftspitze von der Größenordnung von etwa 30 kN in einer Millisekunde aufbringt. Mechanische, pneumatische und hydraulische Geräte sind hierfür nicht geeignet.

Schließlich soll die Vorrichtung in einer sehr rauhen Umgebung, nämlich in einem Bohrloch von etwa 20 cm Durchmesser und 20 m Tiefe arbeitsfähig und deshalb möglichst einfach sein.

Diese Aufgaben werden durch die im Anspruch 1 aufgeführten Merkmale gelöst.

Einzelheiten und Weiterbildungen ergeben sich aus den Unteransprüchen und der Beschreibung, worin anhand der Zeichnung mehrere Ausführungsbeispiele erörtert werden. Es zeigen

Fig. 1 schematisch die physikalische Wirkungsweise des benutzten Effektes in einer ersten Variante.

Fig. 2 schematisch die physikalische Wirkungsweise des benutzten Effektes in einer zweiten Variante,

Fig. 3a,b,c ein Diagramm der auftretenden Spannungen und Ströme,

Fig. 4 einen Schnitt durch eine Anordnung zur Erzeugung tangentialer Impulse für Scherwellen,

Fig. 5 einen Schnitt durch eine weitere Anordnung zur Erzeugung tangentialer Impulse für Scherwellen,

Fig. 6 aufgeschnitten eine Bohrlochverkleidung,

Fig. 7 einen Schnitt durch eine Bohrlochverkleidung mit integrierter Sekundärspule für tangentiale Impulse.

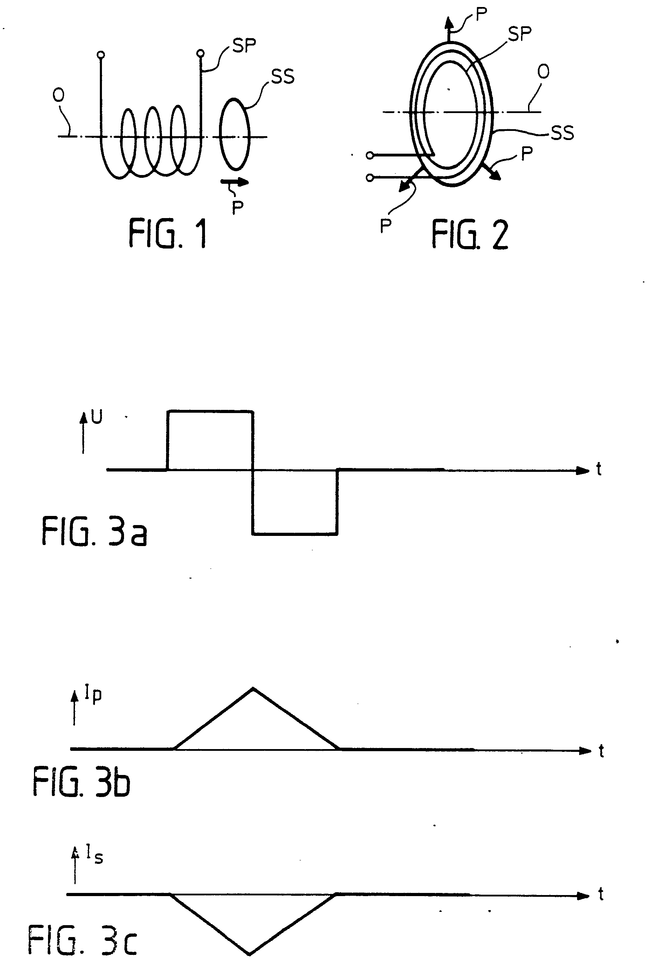

Figur 1 zeigt schematisch eine Primärspule SP und eine Sekundärspule SS, die hintereinander auf einer gedachten Achse O angeordnet sind. Die Sekundärspule SP ist kurzgeschlossen und hat nur eine Wicklung und demnach die Gestalt eines Ringes. Wird an die Primärspule SP ein hochfrequenter Spannungsimpuls nach Fig. 3a angelegt, dann ergibt sich in dieser Spule SP ein Strom gemäß Figur 3b. Im Sekundärspulen-Ring SS wird ein Gegenstrom erzeugt, dessen Verlauf in Fig. 3c dargestellt ist. Der Sekundärstrom $I_S$ wird umso größer, je näher die Spulen SP und SS beieinander liegen. Dabei erhält die Sekundärspule aufgrund der bekannten Induktionsgesetze eine Impuls in Richtung des Pfeiles P.

Bei einer konzentrischen Anordnung von Primärspule SP und Sekundärspule SS nach Figur 2 wird der sekundäre Ring radial in Richtung der Pfeile P gedehnt.

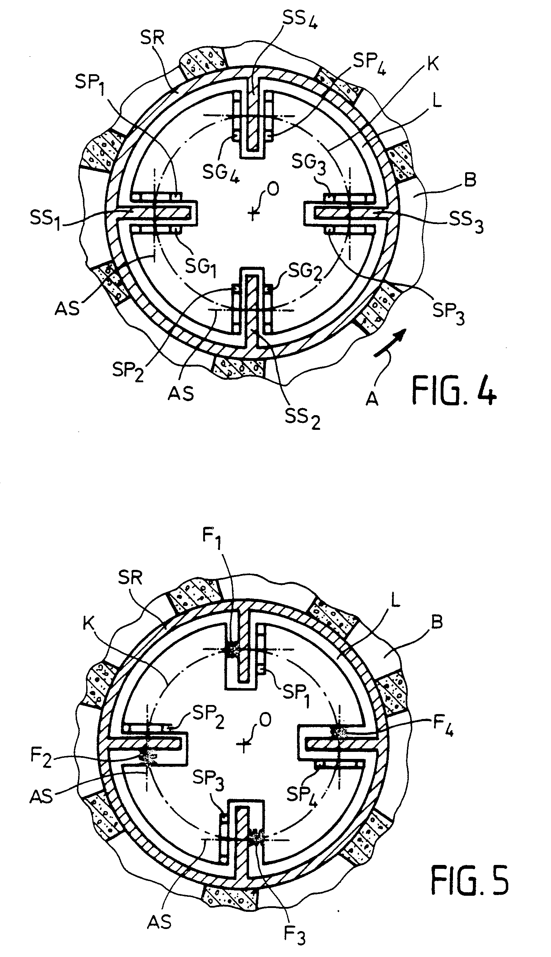

Eine Anordnung als Scherwellengenerator zeigt Figur 4. Hier sind die Spulen $SP_i$ und $SS_i$ entsprechend dem Schema nach Figur 1 hintereinander auf einem zur Bohrlochachse (O) konzentrischen Kreis (K) gelagert und bilden eine Art rotierender Impulsmotor. Die Achsen der Spulen sind mit AS bezeichnet.

In der ersten Phase werden die parallelgeschalteten Spulen $SP_i$ erregt und in den Sekundärspulen $SS_i$, die hier als Wirbelströme zulassende Bleche ausgebildet sind, aber auch Kurzschlußspulen sein können, ein Gegenstrom induziert. Entsprechend dem Trägheitsmoment des Läufers dreht dieser sich in Richtung von Pfeil A. In der zweiten Phase werden die Spulen $SG_i$ erregt und der Läufer wird angehalten oder bewegt sich teilweise wieder zurück. Auf diese Weise wird auf den Käfig SR ein tangential zur Bohrlochachse wirksamer Impuls erzeugt, der zur Auslösung von Scherwellen führt.

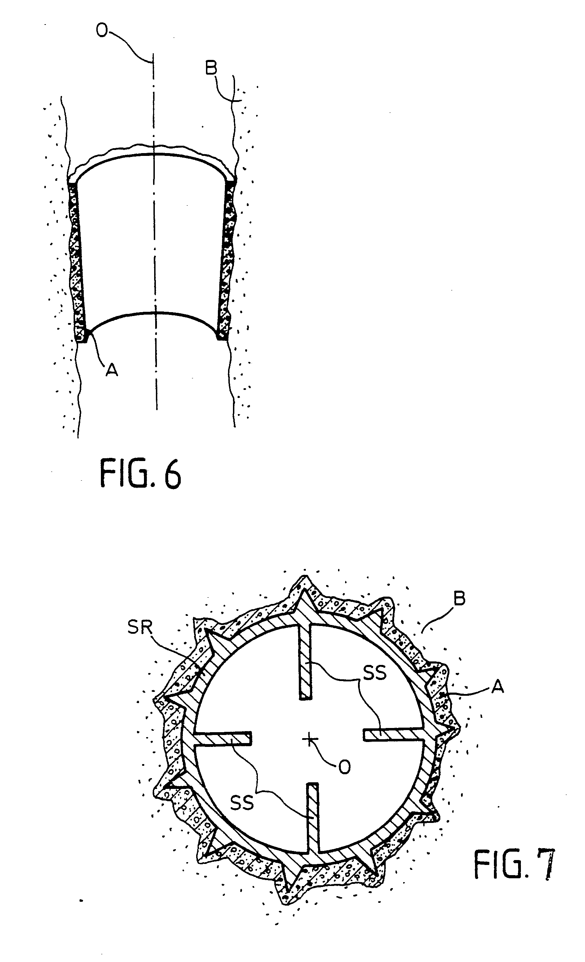

Gemäß Figur 5 können die gegensinnig wirkenden Primärspulen $SG_i$ auch durch Anschlagfedern $F_i$ ersetzt werden, deren Steifigkeit so dimensioniert ist, daß sie den Läufer auf der gleichen Weglänge abbremsen, die die Primärspule SP zum Beschleunigen benötigt.

Da ein Bohrloch eine Radiustoleranz von bis zu 1 cm haben kann, müssen die Sekundärspulen in einem Körper gelagert werden, der im Bohrloch verkeilt werden kann. Hier ist auf hohe Steifigkeit und kleine Masse zu achten. Um Wirbelstromverluste zu verhindern, wird dieser Körper und auch der Träger der Primärspulen PS zweckmäßig aus nichtleitendem Material hergestellt. Es empfiehlt sich deshalb als Werkstoff feingeblechter Stahl oder Keramik.

Die Verkleidung A der Geräte im Bohrloch kann an sich in einem Standardverfahren durch Verkeilen ausgeführt werden. Gemäß einer Weiterbildung der Erfindung erfolgt nach den Figuren 7 bis 8 jedoch zweckmäßiger eine Verankerung durch Ausgießen des Bohrloches B mit einer harten, möglichst dünnen Betonschicht A, die eine definierte und saubere Fläche für eine Verankerung bietet.

Für den Generator ist eine trichterförmige Gußform mit kleinem Neigungswinkel nach Figur 6 hinreichend.

Beim Scherwellengenerator ist es zweckmäßig, wenn nach Figur 7 das Bohrloch B mit senkrechten Rillen aufgerauht wird, um ein gutes tangentiales Haften des Außenzylinders SR zu gewährleisten.

## Patentansprüche

1. Vorrichtung zum Erzeugen von Scherwellen in einem festen Medium mit Hilfe einer elektromagnetischen Einrichtung mit einem Erregerglied zur Erzeugung von mechanischen Impulsen und einem Einkoppelglied zur Weitergabe dieser Impulse an das feste Medium, wobei die elektromagnetische Einrichtung in ein in das feste Medium eingebrachtes Bohrloch (B) eingesetzt ist und das Erregerglied von mindestens einer von elektrischen Stromimpulsen beaufschlagten, in das eine Auskleidung aufweisende Bohrloch (B) eingebrachten und zum Anlegen des Spannungsimpulses aus dem Bohrloch (B) herausgeführten Primärspule (SP, $SP_i$) und das Einkoppelglied von mindestens einer mit der Primärspule (SP, $SP_i$) elektromagnetisch in Wechselwirkung tretenden Sekundärspule (SS, $SS_i$) gebildet wird, dadurch gekennzeichnet, daß eine oder mehrere (SS, $SS_i$) kurzgeschlossene Sekundärspule(n) vorgesehen sind, deren Achse(n) (AS) tangential auf einem zur Bohrlochachse (O) konzentrischen Kreis (K) liegt (liegen), auf dessen Fläche die Bohrlochachse (O) senkrecht steht, wobei die jeweilige Sekundärspule (SS, $SS_i$) unmittelbar neben und koaxial mit der ihr zugeordneten Primärspule (SP, $SP_i$) angeordnet ist, als Wirbelströme erzeugendes Blech ausgebildet und mit der Bohrlochwand starr verbunden ist.

2. Vorrichtung nach Anspruch 1, dadurch gekennzeichnet, daß auf dem Kreis (K), symmetrisch zur Sekundärspule ($SS_i$) jeweils eine weitere, gegensinnig zur ersten ($SP_i$) auf die Sekundärspule ($SS_i$) wirkende Primärspule ($SG_i$) angeordnet ist.

3. Vorrichtung nach Anspruch 1 oder 2, dadurch gekennzeichnet, daß auf dem Kreis (K), symmetrisch zur Sekundärspule ($SS_i$) jeweils eine gegensinnig zur Primärspule auf die Sekundärspule ($SS_i$) wirkende Feder ($F_i$) angeordnet ist.

4. Vorrichtung nach einem der Ansprüche 1 bis 3, dadurch gekennzeichnet, daß der die Sekundärspule(n) mit der Bohrlochauskleidung (A) verbindende Teil als Ring (SR) ausgebildet ist.

5. Vorrichtung nach einem der Ansprüche 1 bis 4, dadurch gekennzeichnet, daß die Sekundärspule(n) (SS, $SS_i$) in die Bohrlochauskleidung (A) eingegossen bzw. eingepreßt ist (sind).

## Claims

1. Device for producing shear waves in a solid medium using an electromagnetic apparatus with an exciter element for the production of mechanical impulses and a coupling element for the transmission of these impulses to the solid medium, the electromagnetic apparatus being inserted in a bore hole (B) in the solid medium and the exciter element being formed by at least one primary coil (SP, $SP_i$) which is subjected to electrical current impulses and which is inserted in a bore hole (B) having a lining and which for the application of the voltage impulse is brought out of the bore hole (B), a coupling element being formed by at least one secondary coil (SS, SSi) interacting electromagnetically with the primary coil (SP, SPi), characterised by the fact that, one or more short-circuited secondary coil(s) (SS, SSi) are provided of which the axes is (are) situated tangentially to a circle (K) concentric with the axis (O) of the bore hole, to the surface of which circle the axis (O) of the bore hole is perpendicular, the secondary coil (SS, SSi) in each case being situated in the immediate vicinity of and coaxial with the primary coil (SP, SPi) associated with it and taking the form of a plate producing eddy currents and being rigidly connected with the wall of the bore hole.

2. Device in accordance with Claim 1, characterised by the fact that on the circle (K), symmetrically to the secondary coil (SSi), a further primary coil (SGi) is in each case provided, which acts on the secondary coil (SSi) in the opposite direction to the first primary coil.

3. Device in accordance with Claim 1 or 2, characterised by the fact that on the circle (K) symmetrically with the secondary coil (SSi), a spring (Fi) is in each case provided, which acts on the secondary coil (SSi) in the opposite direction to the primary coil.

4. Device in accordance with any one of Claims 1 to 3, characterised by the fact that the part connecting the secondary coil(s) with the lining (A) of the drilled hole take the form of a ring (SR).

5. Device in accordance with any one of Claims 1 to 4, characterised by the fact that the secondary coil(s) (SS, SSi) is (are) cast or pressed into the lining (A) of the bore hole.

## Revendications

1. Un procédé d'encapsulage de circuits de microélectronique avec des composants organiques, dans lequel une poudre très fine utilisée comme getter pour l'absorption des gaz corrosifs dans l'espace interne est dispersée dans une gomme de silicone inerte et perméable aux gaz, caractérisé par le fait que l'on utilise comme matériau getter un alliage réactif d'aluminium et d'un métal alcalino-terreux.

2. Un élément de microélectronique avec des composants organiques, dans lequel une poudre très fine utilisée comme getter pour l'absorption des gaz corrosifs dans l'espace interne est dispersée dans une gomme de silicone inerte et perméable aux gaz, caractérisé par le fait que le matériau getter est un alliage réactif d'aluminium et d'un métal alcalino-terreux.

3. Un élément de microélectronique selon la revendication 2, caractérisé par le fait que le matériau getter est $BaAl_4$.

4. Un élément de microélectronique selon la revendication 2 ou 3, caractérisé par le fait que le calibre des grains de matériau getter est compris entre 0,1 et 100 $\mu$m, de préférence entre 5 et 50 $\mu$m.

5. Un élément de microélectronique selon l'une quelconque des revendications précédentes, caractérisé par le fait que le matériau getter est dispersé dans une gomme de silicone inerte vis-à-vis de $BaAl_4$ et des composants du circuit, à fort coefficient de perméabilité aux gaz essentiellement exempte d'ions (concentration < 50 ppm), faiblement réticulable, de préférence un gel de silicone.

FIG. 1

FIG. 2

FIG. 3a

FIG. 3b

FIG. 3c

1

FIG. 4

FIG. 5

FIG. 6

FIG. 7